# EUROPÄISCHE PATENTANMELDUNG

(11) **EP 4 466 985 A1**
(43) Veröffentlichungstag der Anmeldung: **27.11.2024**
(21) Anmeldenummer: 23174626.4
(22) Anmeldetag: 22.05.2023
(51) Int. Cl.: A01G 25/02, A01G 25/16, A01G 9/24, A01G 27/00

(54) **VORRICHTUNG, ANORDNUNG UND VERFAHREN ZUR PFLANZENKULTIVIERUNG**

(71) Anmelder: König, Oliver, 1040 Wien (AT)
(72) Erfinder: König, Oliver, 1040 Wien (AT)
(74) Vertreter: Patentanwälte Pinter & Weiss OG

(57) **Zusammenfassung**

Das modulare System (1) zur Pflanzenkultivierung bestehend aus einer Mehrzahl an Behältern (2), die jeweils eingerichtet sind, ein Substrat (11) aufzunehmen, und/oder formstabilen Substraten (22) vorgesehen ist, wobei die Behälter (2) und die formstabilen Substrate (22) jeweils eingerichtet sind, eine Anzahl von Samen oder Pflanzen (12), insbesondere Stecklinge, im Substrat (11) aufzunehmen, zeichnet sich dadurch aus, dass in jedem Behälter (2) oder formstabilen Substrat (22) zumindest ein Sensor (4) vorgesehen ist und eingerichtet ist, bei Verwendung des Behälters (2) oder des formstabilen Substrats (22) zur Pflanzenkultivierung eine Feuchtigkeit des Substrats (11) zu messen, dass an jedem Behälter (2) oder formstabilen Substrat (22) eine Bewässerungseinheit (3) bestehend aus einer Zufuhrleitung (5) und einem Bewässerungsteil (6) vorgesehen ist, wobei die Zufuhrleitung (5) zum Leiten von Bewässerungsflüssigkeit (19) vorgesehen ist und der Bewässerungsteil (6) mit der Zufuhrleitung (5) verbunden ist, um Bewässerungsflüssigkeit (19) von der Zufuhrleitung (5) zu einer Abgabestelle (7) von Bewässerungsflüssigkeit (19) am Bewässerungsteil (6) zu leiten, wobei das Bewässerungsteil (6) mit dem zumindest einen Sensor (4) zusammenwirkt und das Bewässerungsteil (6) eingerichtet ist, bei Verwendung des Behälters (2) oder des formstabilen Substrats (22) zur Pflanzenkultivierung die Zufuhr von Bewässerungsflüssigkeit (19) zur Abgabestelle (7) freizugeben, wenn der zumindest eine Sensor (4) bei Verwendung des Behälters (2) oder des formstabilen Substrats (22) zur Pflanzenkultivierung eine Feuchtigkeit des Substrats (11) misst, die unterhalb einer vorgegebenen Minimalfeuchtigkeit ist, und dass an der Zufuhrleitung (5) jedes Behälters (2) oder formstabilen Substrats (22) an beiden axialen Enden jeweils ein Verbindungsteil (8) vorgesehen ist, die eingerichtet sind, die Zufuhrleitung (5) eines Behälters (2) oder eines formstabilen Substrats (22) mit der Zufuhrleitung eines benachbarten Behälters (2) oder eines benachbarten formstabilen Substrats (22) bei Verwendung zur Pflanzenkultivierung über die jeweiligen Verbindungsteile (8) lösbar miteinander zu verbinden, um eine durchgehende Bewässerungsleitung (9) zu bilden.

## Beschreibung

Die gegenständliche Erfindung betrifft ein modulares System zur Pflanzenkultivierung, wobei eine Mehrzahl an Behältern, die jeweils eingerichtet sind, ein Substrat aufzunehmen, und/oder formstabilen Substraten vorgesehen ist, wobei die Behälter und die formstabilen Substrate jeweils eingerichtet sind, eine Anzahl von Samen oder Pflanzen, insbesondere Stecklinge, im Substrat aufzunehmen. Die gegenständliche Erfindung betrifft zudem eine Anordnung und ein Verfahren bei Verwendung des modularen Systems zur Pflanzenkultivierung.

In industriellen Produktionsprozessen werden Pflanzen vom Samen bis zur erntereifen Pflanze auf Fördersystemen und unter möglichst optimalen Bedingungen kultiviert. Die Fördersysteme sind dabei in unterschiedlichen Ausführungen und Anordnungen bekannt. Häufig sind die Förderstrecken geradlinige Bahnen, welche z.B. aus Platzgründen vorzugsweise nicht nur seitlich nebeneinander angeordnet sind, sondern auch gestapelt eine regalförmige Einheit bilden können. Neben den aktiv angetriebenen (z.B. wie in WO 2021/219837 A1), sind auch durch die Schwerkraft passiv betriebene Fördersysteme (z.B. wie in EP3745845 A1) bekannt. Dabei sind die Förderstrecken, auf denen die Pflanzen kultiviert werden, um einen bestimmten, gegebenenfalls auch verstellbaren Winkel zur Horizontalen geneigt.

Für eine möglichst kontinuierliche Ernte gelangen die Samen oder Jungpflanzen (auch Stecklinge genannt) an einer Aufgabestation auf das Fördersystem, bewegen sich über eine gewisse Wachstumsperiode entlang der Förderstrecke und sind an einer Entnahmestation z.B. als erntereife Pflanzen wieder entnehmbar. Es können auch Behandlungsstationen entlang der Förderstrecken vorgesehen sein, um das Wachstum der Pflanzen zu kontrollieren. Die Pflanzen werden direkt auf einem Förderband (z.B. wie in DE102021119764 A1) oder in dafür vorgesehenen Schalen oder Behältern (z.B. wie in DE102011050545 B3), welche mittels Fördersystem bewegt werden, gezüchtet. Die Samen oder Jungpflanzen werden auf dem Förderband oder in den Behältern in eine Art von Substrat (z.B. Pflanzenerde, Humus, Kompost, etc.) gepflanzt. Dabei können anstelle der Behälter auch formstabile Substrate verwendet werden, welche ebenfalls dazu ausgebildet sind, Samen oder Jungpflanzen aufzunehmen und mittels Fördersystem bewegt zu werden. Es ist auch eine gemischte Verwendung von Behältern, welche mit Substrat gefüllt sind, und formstabilen Substraten möglich. Als formstabile Substrate werden in diesem Zusammenhang Körper (z.B. Matten, Würfel, etc.) bezeichnet, welche an sich aus Substraten, wie z.B. Steinwolle oder Kokosfasern, geformt sind und während der Verwendung für die Pflanzenkultivierung ihre Form behalten. Üblicherweise sind die formstabilen Substrate noch zusätzlich mit z.B. einer Folie umhüllt.

Neben Obst-, Frucht-, Gemüse- oder Gewürzpflanzen werden auch Cannabispflanzen gezüchtet. Der grundsätzliche Aufbau einer Pflanze setzt sich aus Wurzel (unter dem Substrat) und Spross (über dem Substrat) zusammen.

Um die Bedingungen für das Wachstum der Pflanzen zu optimieren, ist neben den Licht- und Temperaturverhältnissen außerdem eine entsprechende Bewässerung notwendig. Für die Pflanzenkultivierung auf Fördersystemen gibt es unterschiedliche Arten der Bewässerung. Üblicherweise werden die Pflanzen (z.B. in Behältern) auf den Fördersystemen mittels Sprühdüsen großflächig (z.B. wie in WO 2018/011387 A1) oder durch direkte Zufuhr über Leitungen in die Behälter (z.B. wie in DE102019122887 A1) bewässert. Für beide Varianten ist es erforderlich in der Peripherie der Förderstrecken dementsprechende Vorrichtungen vorzusehen. Die großflächige Besprühung ist zwar eine praktische Art der Bewässerung, jedoch ist sie nicht zielgerichtet. Die dosierte Menge gelangt aus der Düse in die Luft und nur ein Teil davon erreicht die Pflanze. Insbesondere durch über den Pflanzen angebrachte Sprühdüsen werden vorrangig die Blätter und nicht die Wurzeln benässt, wo die Pflanzen Wasser aufnehmen. Eine direkte Zufuhr in die Behälter und/oder auch in formstabile Substrate ermöglicht eine effektivere Bewässerung, jedoch ist dabei keine geregelte Bewässerung gegeben. Werden alle Pflanzen, unabhängig vom Wachstumsstadium, über eine gemeinsame Bewässerungsleitung mit der gleichen Menge an Bewässerung versorgt, kann es durch den unterschiedlichen Bedarf der Pflanzen, je nach Wachstumsstadium, bei zu geringen oder zu großen Mengen zur Unterwässerung (Trockenheit) oder Überwässerung des Substrats kommen, wodurch die Pflanzen Schaden nehmen können und das Wachstum gestört wird.

Es ist daher eine Aufgabe der gegenständlichen Erfindung die Pflanzenkultivierung zu verbessern, insbesondere die Handhabung von Behältern und/oder von formstabilen Substraten zur Pflanzenkultivierung und deren Bewässerung zu vereinfachen und zu optimieren.

Erfindungsgemäß wird die Aufgabe mit einem modularen System zur Pflanzenkultivierung dadurch gelöst, dass in jedem Behälter oder formstabilen Substrat zumindest ein Sensor vorgesehen ist und eingerichtet ist, bei Verwendung des Behälters oder des formstabilen Substrats zur Pflanzenkultivierung eine Feuchtigkeit des Substrats zu messen, dass an jedem Behälter oder formstabilen Substrat eine Bewässerungseinheit bestehend aus einer Zufuhrleitung und einem Bewässerungsteil vorgesehen ist, wobei die Zufuhrleitung zum Leiten von Bewässerungsflüssigkeit vorgesehen ist und der Bewässerungsteil mit der Zufuhrleitung verbunden ist, um Bewässerungsflüssigkeit von der Zufuhrleitung zu einer Abgabestelle von Bewässerungsflüssigkeit am Bewässerungsteil zu leiten, wobei das Bewässerungsteil mit dem zumindest einen Sensor zusammenwirkt und das Bewässerungsteil eingerichtet ist, bei Verwendung des Behälters oder des formstabilen Substrats zur Pflanzenkultivierung die Zufuhr von Bewässerungsflüssigkeit zur Abgabestelle freizugeben, wenn der zumindest eine Sensor bei Verwendung des Behälters oder des formstabilen Substrats zur Pflanzenkultivierung eine Feuchtigkeit des Substrats misst, die unterhalb einer vorgegebenen Minimalfeuchtigkeit ist, und dass an der Zufuhrleitung jedes Behälters oder formstabilen Substrats an beiden axialen Enden jeweils ein Verbindungsteil vorgesehen ist, die eingerichtet sind, die Zufuhrleitung eines Behälters oder eines formstabilen Substrats mit der Zufuhrleitung eines benachbarten Behälters oder eines benachbarten formstabilen Substrats bei Verwendung zur Pflanzenkultivierung über die jeweiligen Verbindungsteile lösbar miteinander zu verbinden, um eine durchgehende Bewässerungsleitung zu bilden. Die Feuchtigkeitsmessung des Substrats durch den zumindest einen Sensor und das Zusammenwirken von Sensor und Bewässerungsteil ermöglichen eine bedarfsoptimierte und individuelle Bewässerung der Pflanzen in den Behältern und/oder in den formstabilen Substraten. Das Problem einer Unter- oder Überwässerung wird somit vermieden, wodurch das Wachstum der Pflanzen verbessert wird. Die im Wesentlichen automatisierte Bewässerung reduziert weiters den Personalaufwand. Durch die eine gemeinsame durchgehende Bewässerungsleitung ist die Versorgung der Pflanzen mit Bewässerungsflüssigkeit bei einer Mehrzahl an verbundenen Behältern und/oder formstabilen Substraten einfach realisiert. Es wird ein einfach aufgebautes System zur Pflanzenkultivierung bereitgestellt, das flexibel einsetzbar, einfach handhabbar und an verschiedene Produktionsmengen anpassbar ist.

Bei vorteilhafter Ausführung der Verbindungsteile als Steckverbinder wird das Verbinden und Lösen der Zufuhrleitungen zuverlässig und schnell ermöglicht. Um das Austreten von Bewässerungsflüssigkeit dabei zu verhindern, werden vorzugsweise Steckverbinder oder Schraubverbinder mit Verschlussmöglichkeit verwendet.

Bei vorteilhafter Ausführung des zumindest einen Sensors als ein aus dem Stand der Technik bekannter Feuchtigkeitssensor, welcher beispielsweise aus einem Körper aus porösem Material und einem Speichervolumen mit Flüssigkeit besteht, ist der Körper und das Speichervolumen derart verbunden, dass die Flüssigkeit ausgetauscht werden kann und dass das Bewässerungsteil derart mit dem Speichervolumen verbunden ist, um in Abhängigkeit von dem Flüssigkeitsstandes im Speichervolumen die Zufuhr von Bewässerungsflüssigkeit zur Abgabestelle freizugeben. Durch diese Art der Ausführung des zumindest einen Sensors ist eine bedarfsoptimierte Bewässerung ohne elektrische Versorgung gegeben.

Bei Verwendung des modularen Systems zur Pflanzenkultivierung sind die Behälter und/oder die formstabilen Substrate derart angeordnet, dass jeweils ein Behälter oder ein formstabiles Substrat über jeweils eines der Verbindungsteile der Zufuhrleitung des Behälters oder des formstabilen Substrats lösbar mit einem weiteren Behälter oder einem weiteren formstabilen Substrat über jeweils eines der Verbindungsteile der Zufuhrleitung des weiteren Behälters oder des weiteren formstabilen Substrats verbunden sind, sodass sich eine durchgehende, aus den miteinander verbundenen einzelnen Zufuhrleitungen der Behälter und/oder der formstabilen Substrate gebildete Bewässerungsleitung ausbildet, die an den beiden axialen Enden jeweils durch ein Verbindungsteil einer Zufuhrleitung begrenzt ist und eines dieser beiden Verbindungsteile mit einer Bewässerungsflüssigkeitsquelle verbunden ist und das andere dieser beiden Verbindungsteile mit einem Verschluss verschlossen ist. Daraus ergibt sich eine erweiterbare Produktionskette. Je nach Bedarf kann eine Mehrzahl an Behältern und/oder formstabilen Substraten verbunden werden. Vorzugsweise sind die Behälter und/oder die formstabilen Substrate nebeneinander angeordnet. Die Bewässerungsflüssigkeitsquelle kann dabei eine Wasserquelle und/oder ein Nährstofftank sein. Der Verschluss soll das Austreten der Bewässerungsflüssigkeit verhindern. Über die durchgehende Bewässerungsleitung ist der Transport der Bewässerungsflüssigkeit von der Bewässerungsflüssigkeitsquelle bis zum Bewässerungsteil einfach realisiert und ein Hinzufügen und Entfernen von Behältern oder von formstabilen Substraten durch Verbinden und Lösen der Verbindungsteile ist schnell möglich.

Vorzugsweise sind die Behälter und/oder die formstabilen Substrate auf einem Fördersystem angeordnet und werden in eine Förderrichtung bewegt. Dabei können aktiv oder passiv angetriebene Fördersysteme vorgesehen sein, welche nebeneinander und auch gestapelt angeordnet werden können. Auf Grund der durchgehenden Bewässerungsleitung sind, wie im Stand der Technik, Vorrichtungen zur Bewässerung der Pflanzen in der Peripherie der Förderstrecken nicht erforderlich. Die durchgehende Bewässerungsleitung wird auf dem Fördersystem mit den Behältern und/oder den formstabilen Substraten mitgeführt und durch Verbinden und Lösen der Verbindungsteile erweitert oder gekürzt.

Bei vorteilhafter Verwendung einer Anordnung mit einer Mehrzahl an verbundenen Behältern und/oder formstabilen Substraten, in denen Pflanzen in verschiedenen Wachstumsstadien kultiviert werden, wobei die Pflanzen im fortgeschrittensten Wachstumsstadium in einem letzten Behälter oder in einem letzten formstabilen Substrat der verbundenen Behälter und/oder formstabilen Substrate kultiviert werden und die Pflanzen im jüngsten Wachstumsstadium in einem ersten Behälter oder in einem ersten formstabilen Substrat der verbundenen Behälter und/oder formstabilen Substrate kultiviert werden und dazwischen in zumindest einem weiteren Behälter oder formstabilen Substrat Pflanzen in einem Wachstumsstadium zwischen dem fortgeschrittensten und dem jüngsten kultiviert werden, wird nach einer bestimmten Kultivierungszeitdauer der letzte Behälter oder das letzte formstabile Substrat mit einer Pflanze im gewünschten Wachstumsstadium am Ende aus der Anordnung entfernt wird, indem die Verbindungsteile zwischen dem letzten Behälter oder dem letzten formstabilen Substrat und dem vorletzten Behälter oder dem vorletzten formstabilen Substrat gelöst werden, sodass der vormals vorletzte Behälter oder das vormals letzte formstabile Substrat zum neuen letzten Behälter oder zum neuen letzten formstabilen Substrat in der Anordnung wird, und dass am Anfang der Anordnung ein Behälter oder ein formstabiles Substrat mit einer Pflanze im jüngsten Wachstumsstadium hinzugefügt wird, indem die Verbindungsteile zwischen der Bewässerungsflüssigkeitsquelle und dem ersten Behälter oder dem ersten formstabilen Substrat gelöst werden und mit dem hinzugefügten Behälter oder dem hinzugefügten formstabilen Substrat verbunden werden, sodass der hinzugefügte Behälter oder das hinzugefügte formstabile Substrat zum neuen ersten Behälter oder neuen ersten formstabilen Substrat in der Anordnung wird. Insbesondere bei Verwendung der Anordnung auf einem Fördersystem können in regelmäßigen Abständen Behälter oder formstabile Substrate mit einer Pflanze im jüngsten Wachstumsstadium hinzugefügt und nach der bestimmten Kultivierungszeitdauer im gewünschten Wachstumsstadium von der Anordnung wieder gelöst werden. Dadurch wird eine kontinuierliche Ernte bei einfacher Handhabung der Behälter und/oder der formstabilen Substrate ermöglicht und das Personal wird von Arbeitsspitzen entlastet. Der Transport der Bewässerungsflüssigkeit von der Bewässerungsflüssigkeitsquelle bis zum Bewässerungsteil ist durch die durchgehende Bewässerungsleitung über die Anordnung auch bei der Verwendung auf Fördersystemen einfach realisiert und ermöglicht eine individuelle und bedarfsoptimierte Bewässerung der Pflanzen in den Behältern und/oder in den formstabilen Substraten.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig. 1 den grundlegenden Aufbau des erfindungsgemäßen modularen Systems zur Pflanzenkultivierung,
Fig. 2 eine Anordnung des erfindungsgemäßen modularen Systems zur Pflanzenkultivierung,
Fig. 3 ein Verfahren zur Pflanzenkultivierung mit dem modularen System.

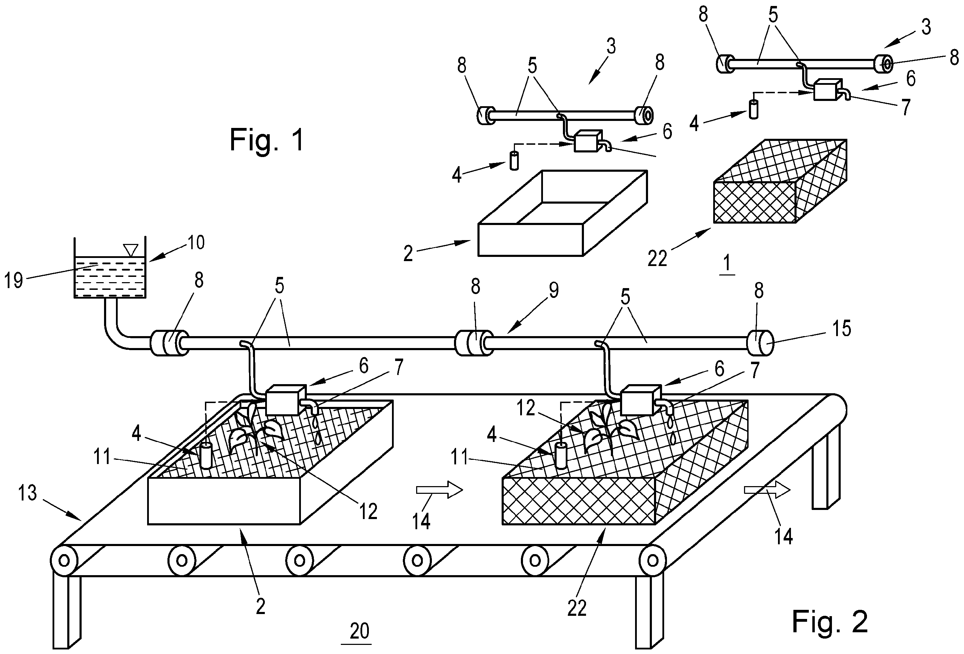

In Fig. 1 ist der grundlegende Aufbau des modularen Systems 1 zur Pflanzenkultivierung gemäß der Erfindung dargestellt. Das modulare System 1 weißt eine Mehrzahl an Behältern 2 und/oder formstabilen Substrate 22 mit jeweils einer Bewässerungseinheit 3 und zumindest einem Sensor 4 auf. In Fig. 1 ist beispielhaft ein Behälter 2 und ein formstabiles Substrat 22 dargestellt. Die Behälter 2 können in unterschiedlichen Formen und Materialien ausgestaltet sein, wie z.B. dargestellt als nach oben hin offene, rechteckförmige Kisten oder Boxen, mit vier Seitenwänden und einer Bodenplatte jeweils aus Kunststoff. Ein Behälter 2 dient der Aufnahme eines Substrats 11.Wie bereits oben beschrieben sind im modularen System 1 jedoch auch formstabile Substrate 22 zur Pflanzenkultivierung einsetzbar oder auch gemischt mit den Behältern 2 verwendbar. Als formstabile Substrate 22 werden in diesem Zusammenhang Körper (z.B. Matten, Würfel, etc.) bezeichnet, welche vorzugsweise aus Substraten 11, wie z.B. Steinwolle oder Kokosfasern, geformt werden und während der Verwendung zur Pflanzenkultivierung ihre Form im Wesentlichen behalten. Auch ein formstabiles Substrat 22 weißt eine Bewässerungseinheit 3 und zumindest einem Sensor 4 auf.

Die Bewässerungseinheit 3 besteht aus einer Zufuhrleitung 5 zum Leiten von Bewässerungsflüssigkeit 19 und einem Bewässerungsteil 6 mit einer Abgabestelle 7 zur Abgabe von Bewässerungsflüssigkeit 19. Der zumindest eine Sensor 4 ist so ausgebildet, dass dieser bei Verwendung mit dem Bewässerungsteil 6 zusammenwirkt. Das Bewässerungsteil 6 besteht beispielsweise aus einem Ventil, welches die Abgabestelle 7 zur Abgabe von Bewässerungsflüssigkeit 19 freigibt oder verschließt.

Als Sensor 4 kann vorzugsweise ein Feuchtigkeitssensor verwendet werden. Dieser besteht vorteilhaft aus einem Körper aus porösem Material, das Bewässerungsflüssigkeit aufgrund der Porosität aufnehmen und abgeben kann, z.B. Ton, und einem Speichervolumen mit einer Flüssigkeit, z.B. der Bewässerungsflüssigkeit 19, besteht. Das Speichervolumen ist derart mit dem Körper verbunden, dass die Flüssigkeit ausgetauscht werden kann. Eine bevorzugte Ausgestaltung des Speichervolumens ist, wenn der Körper hohl z.B. als Kegel ausgeführt ist und dadurch das Speichervolumen selbst bildet. Das Bewässerungsteil 6, welches vorteilhaft als Ventil ausgeführt ist, kann derart mit dem Speichervolumen verbunden sein, um in Abhängigkeit von dem Flüssigkeitsstandes im Speichervolumen freigegeben oder verschlossen zu werden. Der Körper aus porösem Material ist bei Verwendung in das Substrat 11 im Behälter 2 oder in das formstabile Substrat 22 eingesetzt und das Speichervolumen mit Bewässerungsflüssigkeit 19 gefüllt. Bei zunehmender Trockenheit im Substrat 11 im Behälter 2 oder im formstabilen Substrat 22 verlagert sich die Bewässerungsflüssigkeit 19 aus dem Speichervolumen durch den Körper in das Substrat 11 im Behälter 2 oder in das formstabile Substrat 22, der Flüssigkeitstand im Speichervolumen senkt sich. Durch das Senken des Flüssigkeitsstandes unterhalb eines definierten Minimalflüssigkeitsstandes, z.B. aus einer vorgegebenen Minimalfeuchtigkeit im Substrat 11 im Behälter 2 oder im formstabilen Substrat 22, wird das Bewässerungsteil 6 geöffnet. Dadurch kann Bewässerungsflüssigkeit 19 von der Zufuhrleitung 5 aus der Ausgabestelle 7 des Bewässerungsteils 6 strömen und das Substrat 11 im Behälter 2 oder das formstabile Substrat 22 oder die Pflanze 12 an sich wird bewässert. Bei zunehmender Feuchtigkeit im Substrat 11 im Behälter 2 oder im formstabilen Substrat 22 verlagert sich wieder mehr Bewässerungsflüssigkeit 19 durch den Körper in das Speichervolumen, der Flüssigkeitsstand hebt sich wieder und schließt oberhalb des definierten Minimalflüssigkeitsstandes das verbundene Bewässerungsteil 6 wieder. Dadurch kann keine Bewässerungsflüssigkeit 19 mehr von der Zufuhrleitung 5 aus der Ausgabestelle 7 des Bewässerungsteils 6 strömen. Je nach Bedarf kann die Anzahl der Sensoren 4 pro Behälter 2 oder pro formstabilem Substrat 22 variiert werden. Natürlich sind als Sensor 4 auch andere Arten von Feuchtigkeitssensoren, z.B. mechanische oder elektrische, möglich.

Die Zufuhrleitung 5 hat einen Strömungsquerschnitt, eine axiale Länge und zwei axiale Enden. Die Zufuhrleitung 5 ist mit dem Bewässerungsteil 6 verbunden, um dem Bewässerungsteil 6 Bewässerungsflüssigkeit 19 zuzuführen. Beispielsweise zweigt von der Zufuhrleitung 5 eine Leitung ab, die mit dem Bewässerungsteil 6 verbunden ist, wie in Fig.1 dargestellt. Die Zufuhrleitung 5 kann z.B. als ein Schlauch oder eine Leitung aus Kunststoff ausgebildet sein.

An den beiden axialen Enden der Zufuhrleitung 5 jedes Behälters 2 oder jedes formstabilen Substrats 22 ist jeweils ein Verbindungsteil 8 vorgesehen, welche eingerichtet sind, die Zufuhrleitungen 5 der Behälter 2 und/oder der formstabilen Substrate 22 lösbar miteinander zu verbinden. Als Verbindungsteile 8 können z.B. Steckverbinder, Schraubverbinder, Schnellverschlusskupplungen, Schlauchkupplung usw. verwendet werden. Eine weitere Möglichkeit ist es, ein freies Ende der Zufuhrleitung 5 als Verbindungsteil 8 zu verwenden. Zwei freie Enden der Zufuhrleitung 5 (auch möglich mit unterschiedlichen Durchmessern) können beispielsweise durch Ineinanderstecken miteinander lösbar verbunden werden. Zwei freie Enden der Zufuhrleitung 5 können auch über einen separaten Kupplungsteil, beispielsweise ausgeführt als Schraubverbinder, miteinander verbunden werden. Natürlich sind auch andere Kombination an Verbindungsteilen 8 möglich. Das Lösen der Verbindungsteile 8 soll vorzugsweise schnell und unkompliziert funktionieren und die Verbindung der Zufuhrleitungen 5 soll zuverlässig halten und abdichten.

In Fig. 2 ist eine beispielhafte Anordnung 20 zur Pflanzenkultivierung mit dem erfindungsgemäßen modularen System 1 mit einem Behälter 2 und einem formstabilen Substrat 22 dargestellt. Wie bereits oben beschrieben sind nicht nur gemischte Anordnungen 20 mit Behältern 2 und formstabilen Substraten 22 möglich, sondern auch Anordnungen 20 nur mit Behältern 2 oder nur mit formstabilen Substraten 22. Die Behälter 2 sind ausgebildet, um bei Verwendung ein Substrat 11 und eine Anzahl an Samen oder Pflanzen 12, z.B. Stecklinge, aufzunehmen. Die formstabilen Substrate 22 sind ebenfalls ausgebildet, um bei Verwendung eine Anzahl an Samen oder Pflanzen 12, z.B. Stecklinge, aufzunehmen. Als Substrat 11 können beispielsweise organische Medien, wie z.B. Erde, Kompost, Torf, etc., oder anorganische Medien, wie z.B. Perlit, Sand, Tonkugeln, etc., verwendet werden. Dabei ist es auch möglich unterschiedliche Substrate 11 zu mischen. Für formstabile Substrate 22 wird vorzugsweise Steinwolle verwendet. Bei Verwendung der Anordnung 20 sind in verschiedenen Behältern 2 und/oder in verschiedenen formstabilen Substraten 22 Pflanzen 12 in unterschiedlichen Entwicklungsstufen vorhanden. Wie gezeigt sind für die Pflanzenkultivierung mit der Anordnung 20 die Behälter 2, welche mit Substrat 11 gefüllt sind, und/oder die formstabilen Substrate 22 mit jeweils zumindest einer Pflanze 12 bestückt. Je nach Bedarf können natürlich auch mehrere Pflanzen 12 in einen Behälter 2 oder in ein formstabiles Substrat 22 gepflanzt werden. Der zumindest eine Sensor 4 wird ebenfalls in das Substrat 11 im Behälter 2 oder in das formstabile Substrat 22 eingesetzt, und der Sensor 4 wirkt mit dem im Behälter 2 oder im formstabilen Substrat 22 beispielhaft befindlichen Bewässerungsteil 6 zusammen.

In der beispielhaften Anordnung 20 sind ein Behälter 2 und ein formstabiles Substrat 22 nebeneinander angeordnet und die Zufuhrleitungen 5 des Behälters 2 und des formstabilen Substrats 22 sind über die Verbindungsteile 8 verbunden. Dadurch ergibt sich aus den miteinander verbundenen einzelnen Zufuhrleitungen 5 des Behälters 2 und des formstabilen Substrats 22 eine gemeinsame durchgehende Bewässerungsleitung 9 mit zwei axialen Enden, welche jeweils durch ein Verbindungsteil 8 begrenzt sind. Eines dieser Verbindungsteile 8 wird mit einer Bewässerungsflüssigkeitsquelle 10, z.B. einem Wassertank, einem Nährstofftank oder einer Wasserleitung, verbunden. Dabei sollte genug Druck vorhanden sein, um die Bewässerungsflüssigkeit 19 von der Bewässerungsflüssigkeitsquelle 10 in der durchgehenden Bewässerungsleitung 9 zu den Bewässerungsteilen 6 der jeweiligen Behälter 2 und/oder der jeweiligen formstabilen Substrate 22 zu befördern. Das andere Verbindungsteil 8 der durchgehenden Bewässerungsleitung 9 wird mit einem Verschluss 15 verschlossen. Der Verschluss 15 soll gegen das Austreten von Bewässerungsflüssigkeit 19, wie z.B. Wasser, abdichten. Eine vorteilhafte Ausführung des Verschluss 15 wäre selbstschließend, wenn das Verbindungsteil 8 nicht mit einem weiteren Verbindungteil 8 verbunden ist oder zwei Verbindungsteile 8 gelöst werden, sodass keine Bewässerungsflüssigkeit 19 austreten kann (beispielsweise eine tropffreie Schlauchkupplung). Die Bewässerungsflüssigkeit 19 kann z.B. auch eine Nährstofflösung sein oder eine Nährstofflösung kann zusätzlich zur Bewässerungsflüssigkeit 19 hinzugefügt werden.

Von der Bewässerungsflüssigkeitsquelle 10 strömt die Bewässerungsflüssigkeit 19 in der durchgehenden Bewässerungsleitung 9 zu den Bewässerungsteilen 6 der jeweiligen Behälter 2 und/oder der jeweiligen formstabilen Substrate 22. Für eine individuelle und bedarfsoptimierte Bewässerung der Pflanzen 12 sind die Bewässerungsteile 6 in den jeweiligen Behältern 2 und/oder in den jeweiligen formstabilen Substraten 22 beispielsweise als Ventile ausgeführt, welche mit dem zumindest einen Sensor 4 im jeweiligen Behälter 2 oder formstabilen Substrat 22 zusammenwirken und die Abgabestellen 7 zur Abgabe von Bewässerungsflüssigkeit 19 freigeben oder verschließen.

Wie in Fig. 2 dargestellt, kann die Anordnung 20 auch auf einem Fördersystem 13 in eine Förderrichtung 14 bewegt werden. Das Fördersystem 13 kann wie aus dem Stand der Technik bekannt z.B. aktiv angetrieben werden oder es werden vorzugsweise die Behälter 2 und/oder die formstabilen Substrate 22 passiv durch die Schwerkraft angetrieben oder manuell weitergeschoben. Die Behälter 2 und/oder die formstabilen Substrate 22 können sich z.B. auf Rollen oder Schienen bewegen. Die Antriebsart des Fördersystems 13 ist in Fig. 2 nicht dargestellt.

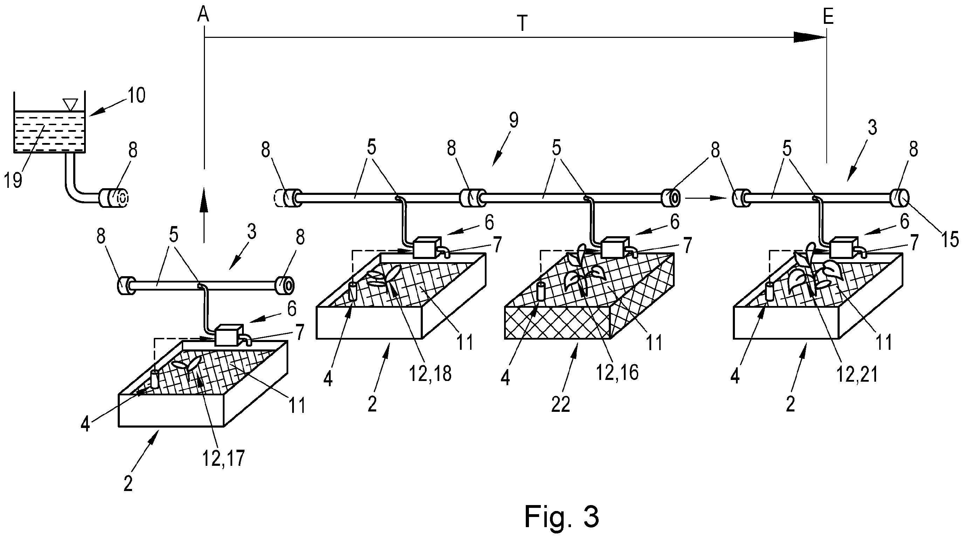

In Fig. 3 ist ein Verfahren zur kontinuierlichen Pflanzenkultivierung mit einer Anordnung 20, mit einer Mehrzahl an Behältern 2 und einem formstabilen Substrat 22, welche miteinander verbunden sind und in denen Pflanzen 12 in verschiedenen Wachstumsstadien über eine Kultivierungszeitdauer T (in Fig. 3 durch Pfeil angedeutet) kultiviert werden, beispielhaft dargestellt. Wie bereits oben beschrieben sind nicht nur gemischte Anordnungen 20 mit Behältern 2 und formstabilen Substraten 22 möglich, sondern auch Anordnungen 20 nur mit Behältern 2 oder nur mit formstabilen Substraten 22. Für die kontinuierliche Pflanzenkultivierung werden die Pflanzen 12 im fortgeschrittensten Wachstumsstadium 16 in einem, wie in Fig. 3 beispielhaft dargestellt, letzten formstabilen Substrat 22 der Anordnung 20 kultiviert, die Pflanzen 12 im jüngsten Wachstumsstadium 17 beispielsweise in einem ersten Behälter 2 der Anordnung 20 und dazwischen beispielsweise in zumindest einem weiteren Behälter 2 Pflanzen 12 in einem Wachstumsstadium 18 zwischen dem fortgeschrittensten und dem jüngsten Wachstumsstadium. Nach einer bestimmten Kultivierungszeitdauer T wird der letzte Behälter 2 oder das letzte formstabile Substrat 22 mit einer Pflanze 12 im erwachsenen Wachstumsstadium 21 am Ende E aus der Anordnung 20 entfernt, indem die Verbindungsteile 8 zwischen dem letzten Behälter 2 oder dem letzten formstabile Substrat 22 und dem vorletzten Behälter 2 oder dem vorletzten formstabilen Substrat 22 gelöst werden. In Fig. 3 wird beispielhaft ein Behälter 2 mit einer Pflanze 12 im erwachsenen Wachstumsstadium 21 von einem formstabilen Substrat 22 mit einer Pflanze 12 im fortgeschrittensten Wachstumsstadium 16 gelöst. Der letzte Behälter 2 oder das letzte formstabile Substrat 22 kann dann aus der Anordnung 20 entfernt werden, sodass der vormals vorletzte Behälter 2 oder das vormals letzte formstabile Substrat 22 zum neuen letzten Behälter 2 oder zum neuen letzten formstabilen Substrat 22 in der Anordnung 20 wird. In Fig. 3 wird beispielhaft der letzte Behälter 2 entfernt, das formstabile Substrat 22 rückt an die letzte Stelle der Anordnung 20 und wird in einem weiteren Schritt als nächstes von der Anordnung 20 gelöst und entfernt. Am Anfang A der Anordnung 20 wird ein Behälter 2 oder ein formstabiles Substrat 22 mit einer Pflanze 12 im jüngsten Wachstumsstadium 17 hinzugefügt, indem die Verbindungsteile 8 zwischen der Bewässerungsflüssigkeitsquelle 10 und dem ersten Behälter 2 oder dem ersten formstabilen Substrat 22 gelöst werden und mit dem hinzugefügten Behälter 2 oder mit dem hinzugefügten formstabilen Substrat 22 verbunden werden, sodass der hinzugefügte Behälter 2 oder das hinzugefügte formstabile Substrat 22 zum neuen ersten Behälter 2 oder zum neuen ersten formstabilen Substrat 22 in der Anordnung 20 wird. In Fig. 3 wird beispielhaft ein Behälter 2 mit einer Pflanze 12 im jüngsten Wachstumsstadium 17 hinzugefügt. Der Anordnung 20 werden in bestimmten zeitlichen Abständen, die von den kultivierten Pflanzen abhängig sind, Behälter 2 oder formstabile Substrate 22 zur Kultivierung am Anfang A der Anordnung 20 hinzugefügt und am Ende E der Anordnung 20 entfernt, wobei die Pflanzen 12, wie in Fig. 2, individuell und bedarfsoptimiert bewässert und/oder gedüngt werden. Dadurch kann eine möglichst effiziente Pflanzenkultivierung und Handhabung der Behälter 2 und/oder der formstabilen Substrate 22 erreicht werden. Dieses Verfahren wird vorzugsweise bei der Pflanzenkultivierung auf Fördersystemen angewendet, wobei z.B. Aufgabe- und Entnahmestationen für Behälter 2 und/oder formstabile Substrate 22 am Anfang A und am Ende E der Anordnung 20 vorgesehen werden können (in Fig. 3 nicht dargestellt).

## Patentansprüche

1. Modulares System (1) zur Pflanzenkultivierung, wobei eine Mehrzahl an Behältern (2), die jeweils eingerichtet sind, ein Substrat (11) aufzunehmen, und/oder formstabilen Substraten (22) vorgesehen ist, wobei die Behälter (2) und die formstabilen Substrate (22) jeweils eingerichtet sind, eine Anzahl von Samen oder Pflanzen (12), insbesondere Stecklinge, im Substrat (11) aufzunehmen, **dadurch gekennzeichnet, dass** in jedem Behälter (2) oder formstabilen Substrat (22) zumindest ein Sensor (4) vorgesehen ist und eingerichtet ist, bei Verwendung des Behälters (2) oder des formstabilen Substrats (22) zur Pflanzenkultivierung eine Feuchtigkeit des Substrats (11) zu messen, **dass** an jedem Behälter (2) oder formstabilen Substrat (22) eine Bewässerungseinheit (3) bestehend aus einer Zufuhrleitung (5) und einem Bewässerungsteil (6) vorgesehen ist, wobei die Zufuhrleitung (5) zum Leiten von Bewässerungsflüssigkeit (19) vorgesehen ist und der Bewässerungsteil (6) mit der Zufuhrleitung (5) verbunden ist, um Bewässerungsflüssigkeit (19) von der Zufuhrleitung (5) zu einer Abgabestelle (7) von Bewässerungsflüssigkeit (19) am Bewässerungsteil (6) zu leiten, wobei das Bewässerungsteil (6) mit dem zumindest einen Sensor (4) zusammenwirkt und das Bewässerungsteil (6) eingerichtet ist, bei Verwendung des Behälters (2) oder des formstabilen Substrats (22) zur Pflanzenkultivierung die Zufuhr von Bewässerungsflüssigkeit (19) zur Abgabestelle (7) freizugeben, wenn der zumindest eine Sensor (4) bei Verwendung des Behälters (2) oder des formstabilen Substrats (22) zur Pflanzenkultivierung eine Feuchtigkeit des Substrats (11) misst, die unterhalb einer vorgegebenen Minimalfeuchtigkeit ist, **und dass** an der Zufuhrleitung (5) jedes Behälters (2) oder formstabilen Substrats (22) an beiden axialen Enden jeweils ein Verbindungsteil (8) vorgesehen ist, die eingerichtet sind, die Zufuhrleitung (5) eines Behälters (2) oder eines formstabilen Substrats (22) mit der Zufuhrleitung eines benachbarten Behälters (2) oder eines benachbarten formstabilen Substrats (22) bei Verwendung zur Pflanzenkultivierung über die jeweiligen Verbindungsteile (8) lösbar miteinander zu verbinden, um eine durchgehende Bewässerungsleitung (9) zu bilden.

2. Modulares System (1) nach Anspruch 1, **dadurch gekennzeichnet, dass** die Verbindungsteile (8) als Steckverbinder oder Schraubverbinder ausgeführt sind.

3. Modulares System (1) nach einem der Ansprüche 1 bis 2, **dadurch gekennzeichnet, dass** der zumindest eine Sensor (4) als Feuchtigkeitssensor ausgeführt ist.

4. Modulares System (1) nach Anspruch 3, **dadurch gekennzeichnet, dass** der Feuchtigkeitssensor aus einem Körper aus porösem Material und einem Speichervolumen mit Flüssigkeit besteht, **dass** der Körper und das Speichervolumen derart verbunden sind, dass die Flüssigkeit ausgetauscht werden kann, **und dass** das Bewässerungsteil (6) derart mit dem Speichervolumen verbunden ist, um in Abhängigkeit von dem Flüssigkeitsstandes im Speichervolumen die Zufuhr von Bewässerungsflüssigkeit (19) zur Abgabestelle (7) freizugeben.

5. Anordnung (20) zur Pflanzenkultivierung mit einem modularen System (1) nach einem der Ansprüche 1 bis 4, **dadurch gekennzeichnet, dass** die Behälter (2) und/oder die formstabilen Substrate (22) derart angeordnet, dass jeweils ein Behälter (2) oder ein formstabiles Substrat (22) über jeweils eines der Verbindungsteile (8) der Zufuhrleitung (5) des Behälters (2) oder des formstabilen Substrats (22) lösbar mit einem weiteren Behälter (2) oder einem weiteren formstabilen Substrat (22) über jeweils eines der Verbindungsteile der Zufuhrleitung des weiteren Behälters (2) oder des weiteren formstabilen Substrats (22) verbunden sind, sodass sich eine durchgehende, aus den miteinander verbundenen einzelnen Zufuhrleitungen (5) der Behälter (2) und/oder der formstabilen Substrate (22) gebildete Bewässerungsleitung (9) ausbildet, die an den beiden axialen Enden jeweils durch ein Verbindungsteil (8) einer Zufuhrleitung (5) begrenzt ist und eines dieser beiden Verbindungsteile (8) mit einer Bewässerungsflüssigkeitsquelle (10) verbunden ist und das andere dieser beiden Verbindungsteile mit einem Verschluss (15) verschlossen ist.

6. Anordnung (20) nach dem Anspruch 5, **dadurch gekennzeichnet, dass** die Bewässerungsflüssigkeitsquelle (10) eine Wasserquelle und/oder Nährstoffquelle ist.

7. Anordnung (20) nach Anspruch 5 oder 6, **dadurch gekennzeichnet, dass** die Behälter (2) und/oder die formstabilen Substrate (22) auf einem Fördersystem (13) angeordnet sind und in eine Förderrichtung (14) bewegt werden.

8. Verfahren zur Pflanzenkultivierung mit einem modularen System (1) nach einem der Ansprüche 5 bis 7, mit der Anordnung (20), mit einer Mehrzahl an verbundenen Behältern (2) und/oder formstabilen Substraten (22), in denen Pflanzen (12) in verschiedenen Wachstumsstadien kultiviert werden, wobei die Pflanzen (12) im fortgeschrittensten Wachstumsstadium (16) in einem letzten Behälter (2) oder in einem letzten formstabilen Substrat (22) der verbundenen Behälter (2) und/oder formstabilen Substrate (22) kultiviert werden und die Pflanzen (12) im jüngsten Wachstumsstadium (17) in einem ersten Behälter (2) oder in einem ersten formstabilen Substrat (22) der verbundenen Behälter (2) und/oder formstabilen Substrate (22) kultiviert werden und dazwischen in zumindest einem weiteren Behälter (2) oder formstabilen Substrat (22) Pflanzen (12) in einem Wachstumsstadium (18) zwischen dem fortgeschrittensten und dem jüngsten Wachstumsstadium kultiviert werden, **dadurch gekennzeichnet, dass** nach einer bestimmten Kultivierungszeitdauer (T) der letzte Behälter (2) oder das letzte formstabile Substrat (22) mit einer Pflanze (12) im erwachsenen Wachstumsstadium (21) am Ende (E) aus der Anordnung (20) entfernt wird, indem die Verbindungsteile (8) zwischen dem letzten Behälter (2) oder dem letzten formstabilen Substrat (22) und dem vorletzten Behälter (2) oder dem vorletzten formstabilen Substrat (22) gelöst werden, sodass der vormals vorletzte Behälter (2) oder das vormals letzte formstabile Substrat (22) zum neuen letzten Behälter (2) oder zum neuen letzten formstabilen Substrat (22) in der Anordnung (20) wird, **und dass** am Anfang (A) der Anordnung (20) ein Behälter (2) oder ein formstabiles Substrat (22) mit einer Pflanze (12) im jüngsten Wachstumsstadium (17) hinzugefügt wird, indem die Verbindungsteile (8) zwischen der Bewässerungsflüssigkeitsquelle (10) und dem ersten Behälter (2) oder dem ersten formstabilen Substrat (22) gelöst werden und mit dem hinzugefügten Behälter (2) oder dem hinzugefügten formstabilen Substrat (22) verbunden werden, sodass der hinzugefügte Behälter (2) oder das hinzugefügte formstabile Substrat (22) zum neuen ersten Behälter (2) oder zum neuen ersten formstabilen Substrat (22) in der Anordnung (20) wird.
